# EUROPEAN PATENT APPLICATION

(11) **EP 3 462 158 A1**
(43) Date of publication of application: **03.04.2019**
(21) Application number: 17799276.5
(22) Date of filing: 11.05.2017
(51) Int. Cl.: G01N 1/00, G01N 35/10, G01N 37/00

(54) **LIQUID INJECTION ATTACHMENT, AND LIQUID INJECTING DEVICE**

(30) Priority: 20.05.2016 JP 2016101784
(71) Applicant: NOK Corporation, Minato-ku Tokyo 105-8585 (JP)
(72) Inventor: MUROTA Yuki, Fujisawa-shi Kanagawa 251-0042 (JP); UDA Toru, Fujisawa-shi Kanagawa 251-0042 (JP)
(74) Representative: TBK
(86) International application number: PCT/JP2017/017890
(87) International publication number: WO 2017/199852

(57) **Abstract**

An object of the present invention is to provide a liquid injection attachment and a liquid injection device in which deformation or damages of an attachment body can be prevented while a sufficient amount of collapse during liquid injection can be secured for better sealing. The object is attained by the fact that a through-hole 23 is included within an attachment body 11 having a cylindrical shape, an insertion opening 11b receiving a distal end portion of a liquid injecting implement inserted thereinto is included on a rear end portion side of the through-hole 23, and a liquid flow outlet 11a discharging liquid injected from the liquid injecting implement to outside of the attachment body 11 is included on a front end portion side, an annular rib 24 having a plate shape projecting inward in the through-hole 23 leaving the liquid flow outlet 11a is provided in a front end portion of the attachment body 11, an annular receiving face 24a is included on the annular rib 24 and facing the rear end portion side of the through-hole 23, the annular receiving face 24a receiving a load from the liquid injecting implement in an axial direction during liquid injection, and an annular lip portion 25 around the liquid flow outlet 11a is provided at a location where the load received by the annular receiving face 24a of the annular rib 24 acts on in an axial direction.

## Description

### TECHNICAL FIELD

The present invention relates to a liquid injection attachment and a liquid injection device. In particular, the present invention relates to a liquid injection attachment to be mounted on a distal end portion of a liquid injecting implement (such as a pipette) for use when the liquid injecting implement is used to inject liquid into an inlet (injection port) of a micro-fluid chip or the like into which the liquid is to be introduced, and to a liquid injection device provided with the liquid injection attachment.

### BACKGROUND

Attention has been drawn to micro-fluid chips known under the names of Micro Total Analysis Systems (µTAS) or Lab-on-Chips. The micro-fluid chips have microstructures such as microchannels that form a flow channel of a predetermined shape in a substrate and ports, and allow for various operations such as chemical reactions, synthesis, purification, extraction, formation and/or analysis of substances in the microstructures.

Liquid such as reagent is injected into a microchannel in a micro-fluid chip from an inlet (injection port) through a liquid injecting implement such as a syringe, a pipette, or a pipette tip attached to such a pipette. At this time, it is necessary that the liquid can be injected from the inlet (injection port) without any leakage.

The Patent Document 1 has proposed a liquid injection attachment to be mounted on a distal end portion of a liquid injecting implement so that the liquid can be injected from the inlet (injection port) without any leakage. The attachment, which consists of an elastic body (soft elastomer) as a whole, is provided with a through-hole into which a distal end of a dispensing tip, which serves a liquid injecting implement, is inserted, and has a planar shaped front end face. The distal end portion of the liquid injecting implement inserted in the attachment penetrates the through-hole or is plugged in the hole to such an extent that it does not pass therethrough, and the planar portion of the front end face is configured to seal the periphery of the inlet (injection port) during liquid injection.

### PRIOR ART DOCUMENTS

### PATENT DOCUMENTS

Patent Document 1: JP-A-2012-147751

### SUMMARY OF THE INVENTION

### PROBLEM TO BE SOLVED BY THE INVENTION

In the case of such a liquid injecting implement consisting of an elastic body, a great challenge is how well the tolerance can be absorbed on the side of the liquid injecting implement. In other words, to ensure that any leakage can be prevented when the liquid is injected into the inlet (injection port), the liquid injecting implement consisting of an elastic body needs to be set an increased amount of collapse under load of the liquid injecting implement while being in contact with an injection face.

However, it is not easy to secure a sufficient amount of collapse during liquid injection because there is a constraint on an acceptable space in design for the liquid injecting implement and the injection face. When the amount of collapse is increased, the attachment, when collapsed, greatly bulges accordingly in the radial direction, increasing its outside diameter, which may cause interference with other inlets (injection ports).

Further, as described in Patent Document 1, the construction of the attachment, which is mountable only by inserting the distal end portion of the liquid injecting implement into the through-hole, has a problem that it is susceptible to buckling, deformation or damages when the distal end portion of the liquid injecting implement is pressed into the through-hole or when an axial load is applied during liquid injection. This is because the distal end portion is tightly fitted into the through-hole in order to secure sealing properties between the hole and the distal end portion of the liquid injecting implement. Accordingly, it may be difficult to stably hold the liquid injecting implement.

Therefore, an object of the present invention is to provide a liquid injection attachment and a liquid injection device in which deformation or damages of an attachment body can be prevented while a sufficient amount of collapse during liquid injection can be secured for better sealing.

Other objects of the present invention will be apparent from the description below.

### MEANS FOR SOLVING PROBLEM

The above object can be attained by embodiments described below.
1. A liquid injection attachment, wherein
   a through-hole is included within an attachment body having a cylindrical shape,
   an insertion opening receiving a distal end portion of a liquid injecting implement inserted thereinto is included on a rear end portion side of the through-hole, and a liquid flow outlet discharging liquid injected from the liquid injecting implement to outside of the attachment body is included on a front end portion side,
   an annular rib having a plate shape projecting inward in the through-hole leaving the liquid flow outlet is provided in a front end portion of the attachment body,
   an annular receiving face is included on the annular rib and facing the rear end portion side of the through-hole, the annular receiving face receiving a load from the liquid injecting implement in an axial direction during liquid injection, and
   an annular lip portion around the liquid flow outlet is provided at a location where the load received by the annular receiving face of the annular rib acts on in an axial direction.
2. A liquid injection attachment, wherein
   a through-hole is included within an attachment body having a cylindrical shape,
   an insertion opening receiving a distal end portion of a liquid injecting implement inserted thereinto is included on a rear end portion side of the through-hole, and a liquid flow outlet discharging liquid injected from the liquid injecting implement to outside of the attachment body is included on a front end portion side,
   an annular receiving face to be in contact with the liquid injecting implement and receiving a load in an axial direction during liquid injection is provided in a rear end portion of the attachment body, and
   in a front end portion of the attachment body, an annular lip portion around the liquid flow outlet is provided at a location where the load received by the annular receiving face acts on in an axial direction.
3. The liquid injection attachment according to said 1 or 2, wherein a flange portion overhanging radially outward is provided on an outer periphery of a rear end portion of the attachment body.
4. The liquid injection attachment according to said 1 or 2, wherein an anti-diameter expansion member for preventing a force in a radial direction is formed on an outer periphery of a rear end portion of the attachment body.
5. The liquid injection attachment according to any one of said 1 to 4, wherein a tapered surface diametrically expanding toward the insertion opening is formed in a rear end portion of the attachment body.
6. A liquid injection device, comprising:
   a liquid injection attachment including: an attachment body having a cylindrical shape, the attachment body having a through-hole inside; an insertion opening provided on a rear end portion side of the through-hole, the insertion opening receiving a distal end portion of a liquid injecting implement inserted thereinto; a liquid flow outlet provided on a front end portion side of the through-hole, the liquid flow outlet discharging liquid injected from the liquid injecting implement to outside of the attachment body; an annular rib having a plate shape projecting inward in the through-hole leaving the liquid flow outlet in a front end portion of the attachment body; an annular receiving face on the annular rib and facing the rear end portion side of the through-hole, the annular receiving face receiving a load from the liquid injecting implement in an axial direction during liquid injection; a flange portion overhanging radially outward on an outer periphery of a rear end portion of the attachment body; and a tapered surface formed on the rear end side of the attachment body and diametrically expanding toward the insertion opening of the attachment body; and
   a liquid injecting implement having a distal end portion being inserted into the insertion opening and a distal end face being brought into contact with the annular receiving face, the liquid injecting implement having a cylindrical shoulder face having a tapered shape corresponding to a shape of the tapered surface,
   wherein in the front end portion of the attachment body, an annular lip portion around the liquid flow outlet is provided at a location where the load received by the annular receiving face from the liquid injecting implement acts on in an axial direction.

### EFFECT OF THE INVENTION

According to the present invention, there can be provided a liquid injection attachment and a liquid injection device in which deformation or damages of an attachment body can be prevented while a sufficient amount of collapse during liquid injection can be secured for better sealing.

### BRIEF DESCRIPTION OF DRAWINGS

[Figure 1] Figure 1 is a perspective view in which a liquid injection attachment of the present invention is used for a micropipette.
[Figure 2] Figure 2 is a perspective view illustrating an exemplary micropipette and pipette tip.
[Figure 3] Figure 3 is a sectional view of a liquid injection attachment according to a first embodiment of the present invention.
[Figure 4] Figure 4 is a partial cutaway illustration of how a distal end portion of a liquid injecting implement is inserted into the liquid injection attachment illustrated in Figure 3.
[Figure 5] Figure 5 is a sectional view illustrating the liquid injection attachment illustrated in Figure 3 in use.
[Figure 6] Figure 6 is a sectional view of a liquid injection attachment according to a second embodiment of the present invention.
[Figure 7] Figure 7 is a sectional view illustrating the liquid injection attachment illustrated in Figure 6 in use.
[Figure 8] Figure 8 is a sectional view of a liquid injection attachment according to a third embodiment of the present invention.
[Figure 9] Figure 9(a) is a sectional view of a liquid injection attachment according to a fourth embodiment of the present invention, and Figure 9(b) is a sectional view of a liquid injection attachment according to another fourth embodiment of the present invention.
[Figure 10] Figure 10 is a sectional view illustrating the liquid injection attachment illustrated in Figure 9(a) in use, and illustrating a configuration of a liquid injection device of the present invention.
[Figure 11] Figure 11 is an illustration of an example of a method for injecting liquid using a liquid injection attachment according to the present invention.

### DESCRIPTION OF THE PREFERRED EMBODIMENTS

Embodiments of the present invention will now be described with reference to drawings.

### [Configurations of Liquid Injection Attachment and Liquid Injection Device]

### (First Embodiment)

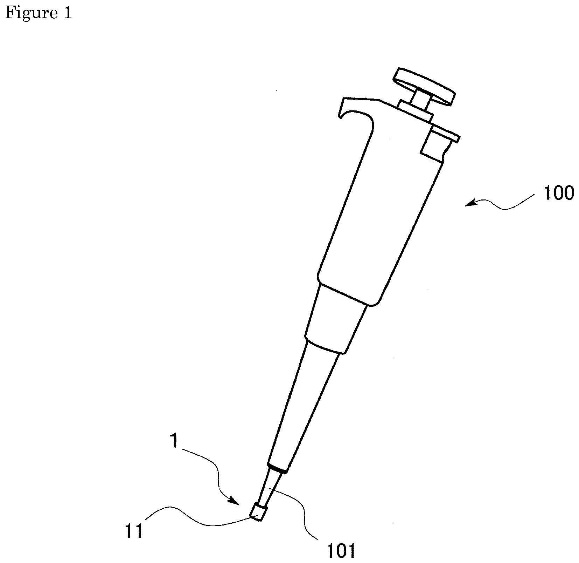

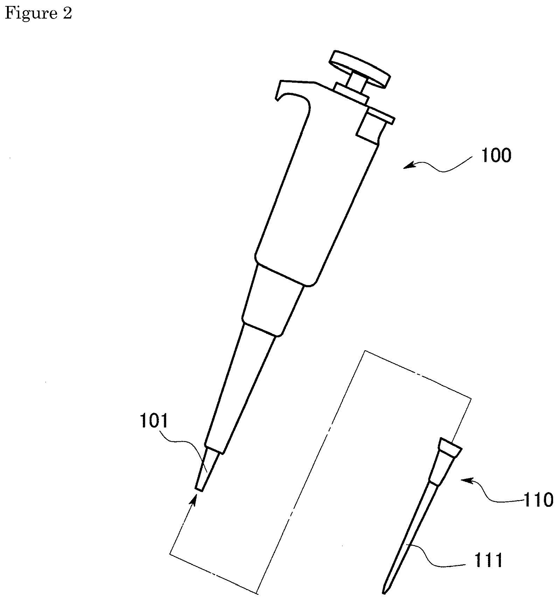

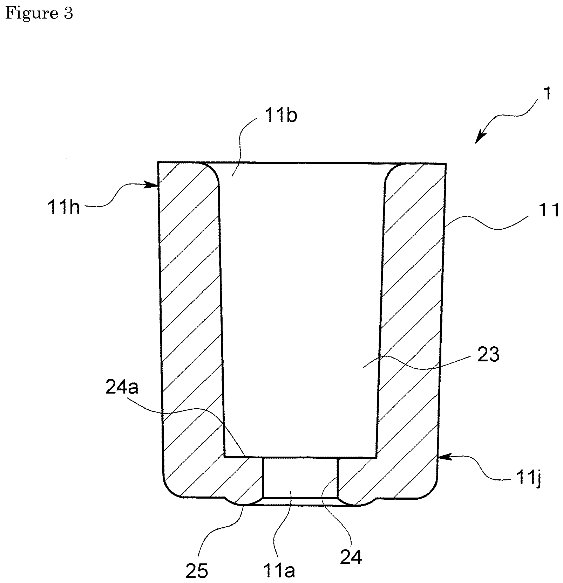

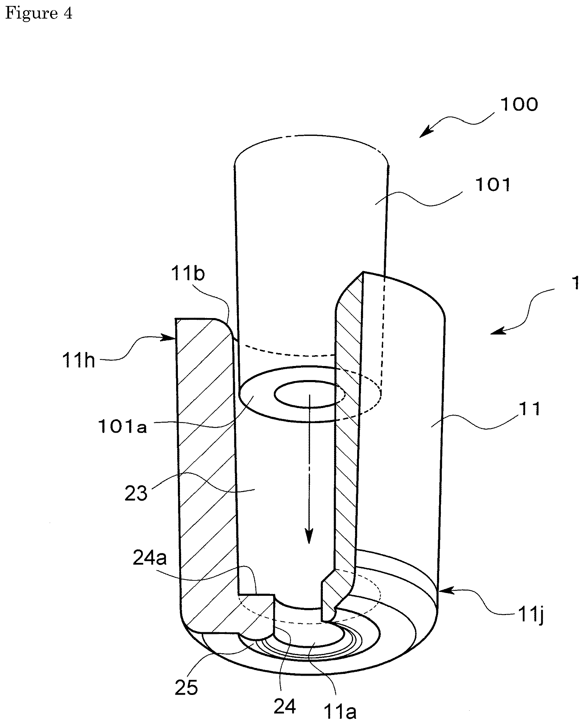

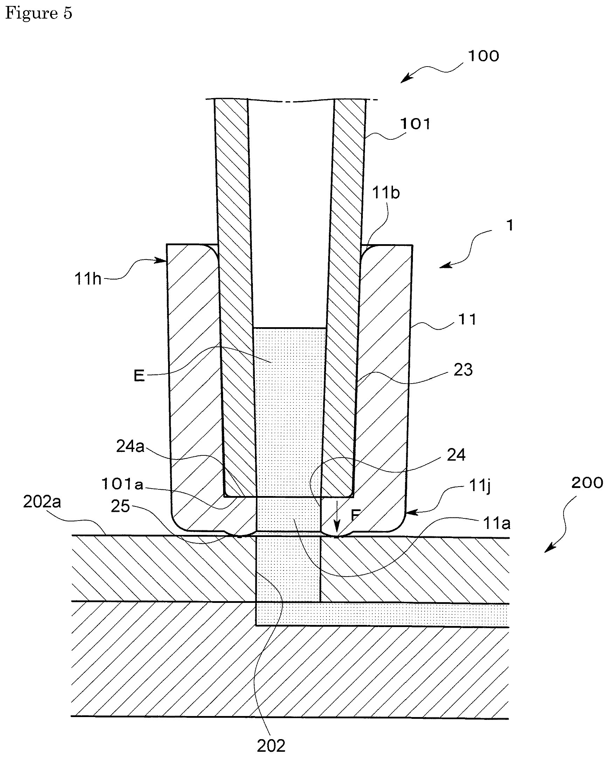

Figure 1 is a perspective view in which a liquid injection attachment of the present invention is used for a micropipette, and Figure 2 is a perspective view illustrating an exemplary micropipette and pipette tip. Figure 3 is a sectional view of a liquid injection attachment according to an embodiment of the present invention, Figure 4 is a partial cutaway illustration of how a distal end portion of a liquid injecting implement is inserted into the liquid injection attachment illustrated in Figure 3, and Figure 5 is a sectional view illustrating the liquid injection attachment illustrated in Figure 3 in use.

A liquid injection device of the present invention is made up of a liquid injection attachment of the present invention and a liquid injecting implement such as micropipette.

As illustrated in Figure 1, a liquid injection attachment 1 of the present invention is used while it is detachably mounted to, for example, a distal end section 101 of a micropipette 100, which serves as a liquid injecting implement. The micropipette 100 is used to take in and inject a minute amount of liquid on the order of microliters.

The liquid injection attachment 1 is used in injection operation of liquid such as reagent into a micro-fluid chip from, for example, the micropipette 100 that serves as a liquid injecting implement. The liquid injection attachment 1 is used to couple, for example, the micropipette 100 that serves as a liquid injecting implement with an inlet (injection port) 202 of a micro-fluid chip 200 illustrated in Figure 5.

Further, as illustrated in Figure 2, the liquid injection attachment 1 is also used while it is detachably mounted to a distal end section 111 of a pipette tip 110 that is used to suck and inject a minute amount of liquid on the order of microliters, the pipette tip 110 being attached to the distal end section of the micropipette 100.

The micropipette 100 used in the present invention may include, but not particularly limited to, any pipette in general, any micropipette that has a pipette tip as its distal end portion, and any other syringes.

As illustrated in Figure 3, the liquid injection attachment 1 has an attachment body 11 of a cylindrical shape. The attachment body 11 is preferably formed of a rubber-like elastic body into a cylindrical shape as a whole.

When the attachment body 11 is formed of a rubber-like elastic body, excellent sealing properties are provided to contribute to preventing liquid leakage on condition that the attachment body 11 has a diameter (an inside diameter) smaller than an outside diameter of the micropipette 100. The attachment body 11 can be used for another micropipette 100 that has a different outside diameter to some extent.

Specific materials for the rubber-like elastic body may be selected as appropriate in consideration of a type or the like of liquid injected from the micropipette 100, and typically include silicone rubber, fluororubber, acrylic rubber, nitrile rubber, butyl rubber, and the like. A method for forming the attachment body 11 includes, but not particularly limited to, compression molding, injection molding, and the like.

The attachment body 11 has a through-hole 23 inside. The attachment body 11 has an insertion opening 11b into which the distal end section 101 of the micropipette 100 is inserted on a rear end portion side of the through-hole 23, and a liquid flow outlet 11a that discharges liquid injected from the micropipette 100 to outside of the attachment body 11 on a front end portion side.

The term "front end side" as used herein refers to a portion on the side of an end where liquid is discharged from the liquid injection attachment 1, and "rear end side" refers to a portion of the side axially opposite from the front end portion. In Figure 3, the downside corresponds to the "front end side", and the upside corresponds to the "rear end side".

An annular rib 24 projecting inward in the through-hole 23 leaving the liquid flow outlet 11a is provided on the front end side 11j.

The annular rib 24 has an annular receiving face 24a on a surface of the through-hole 23 on the side of the insertion opening 11b (a top face of the annular rib 24 in Figure 3). The annular receiving face 24a is an annular horizontal face formed toward the insertion opening 11b.

On the front end side 11j is also provided an annular lip portion 25 around the liquid flow outlet 11a on a surface opposite from the annular receiving face 24a of the annular rib 24 (a bottom face of the annular rib 24 in Figure 3).

The annular lip portion 25 is integral with the annular rib 24 to project in the axial direction.

The annular lip portion 25 is configured to have the same width as the annular receiving face 24a. In other words, the annular lip portion 25 is arranged to be within the range of the projection length of the annular rib 24.

As illustrated in Figure 4, the annular receiving face 24a is brought into contact with a distal end face 101a of the distal end section 101 when the distal end section 101 of the micropipette 100 is inserted into the insertion opening 11b of the attachment body 11. In contact with the distal end face 101a of the micropipette 100, the annular receiving face 24a acts as a surface that receives a load F in the axial direction of the micropipette 100 during liquid injection.

Further, as illustrated in Figure 5, the annular lip portion 25 is brought into contact with an upper face (injection face) 202a around the inlet (injection port) 202 of the micro-fluid chip 200 to form a seal element.

Accordingly, when the load F acts on the annular receiving face 24a in the axial direction of the micropipette 100, the load F acts on the annular lip portion 25 via the annular rib 24 in the axial direction of the micropipette 100. In this way, the annular lip portion 25 can efficiently be compressed and deformed, so that the amount of collapse sufficient for forming the seal element can be secured. In addition, only the annular lip portion 25 can be compressed and deformed when the load F is applied.

In the embodiment, although the annular lip portion 25 is illustrated in a raised form of a hemispherical cross section, a specific sectional shape of the annular lip portion 25 may include, but not particularly limited to, a triangular cross section, a trapezoidal cross section, or the like, for example. Further, the number of the annular lip portion 25 is not limited to one, but more than one annular lip portion 25 may be concentrically provided on condition that they are within the range of the projection length of the annular rib 24.

Further, in the embodiment, although the description has been made to the case in which the annular lip portion 25 is integrated with the annular rib 24, they may be separate bodies from each other. In the case of separate bodies, for example, semicircular arc annular lip portions 25 may be fixed to the annular rib 24 such that they surround the liquid flow outlet 11a. Further, although the description has been made to the case in which the annular lip portion 25 is configured to have the same width as the annular rib 24, the invention is not so limited, and the annular lip portion 25 may be formed over the entire front end region of the attachment body 11. In addition, the shape of the annular lip portion 25 may be varied to suit the injection face as appropriate.

When provided as separate bodies, the annular lip portion 25 may be made of a material different from those for the attachment body 11 and the annular rib 24, and in this case, the annular lip portion 25 is preferably made of a material softer than those for the attachment body 11 and the annular rib 24. In this way, the annular lip portion 25 can efficiently be compressed and deformed, so that the amount of collapse sufficient for forming the seal element can be secured.

Now, how the liquid injection attachment 1 is used to inject liquid E into the inlet (injection port) 202 of the micro-fluid chip 200, as illustrated in Figure 5, will be described.

First, the distal end section 101 of the micropipette 100 is inserted into the insertion opening 11b of the attachment body 11. Then, the annular lip portion 25 of the liquid injection attachment 1 is brought into contact with the upper face (injection face) 202a around the inlet (injection port) 202, the load F of the micropipette 100 is applied to the annular receiving face 24a in the axial direction. In other words, the distal end face 101a of the micropipette 100 is brought into contact with the annular receiving face 24a in the through-hole 23 to form a first seal portion between the distal end face 101a and the annular receiving face 24a.

Next, once the annular receiving face 24a receives the load F in the axial direction from the micropipette 100, the load F acts on the annular rib 24 in the axial direction of the micropipette 100. Then, the annular lip portion 25 is compressed to be elastically deformed against the upper face (injection face) 202a and seals the periphery of the inlet (injection port) 202. As a result, a second seal portion is formed between the annular lip portion 25 and the upper face (injection face) 202a.

Then, the liquid E in the micropipette 100 is sent from the liquid flow outlet 11a of the liquid injection attachment 1 to the inlet (injection port) 202 of the micro-fluid chip 200, without leakage to the outside because of the first and second seal portions.

In this way, according to the liquid injection attachment 1, when the micropipette 100 is pressed to apply the load F to the upper face (injection face) 202a in the axial direction, the distal end face 101a of the micropipette 100 is brought into contact with the annular receiving face 24a, so that the load F in the axial direction of the micropipette 100 is applied to the annular receiving face 24a.

Then, when the load F is exerted in the axial direction of the micropipette 100, the load F acts on the annular lip portion 25 via the annular rib 24 in the axial direction of the micropipette 100. In this way, the annular lip portion 25 can efficiently be compressed, so that the amount of collapse sufficient for being able to absorb the tolerance of the micropipette 100 can easily be secured for better sealing.

In addition, since the load F is applied to the annular receiving face 24a without radial deformation of the through-hole 23, the attachment body 11 may not be buckled, deformed or damaged, and the micropipette 100 can stably be held during liquid injection.

Furthermore, since only the annular lip portion 25 is collapsed under the load F and the attachment body 11 itself may not be deformed to greatly bulge in the radial direction, the liquid injection attachment 1 may not interfere with other inlets (injection ports) or the like during liquid injection.

Further, according to the liquid injection attachment 1, it is possible to create seals in two locations: between the distal end face 101a of the micropipette 100 and the annular receiving face 24a; and between the annular lip portion 25 and the upper face (injection face) 202a.

Since no seal element needs to be formed between an inner peripheral surface of the through-hole 23 and an outer peripheral surface of the distal end section 101 of the micropipette 100, there is no need of press fitting of the distal end section 101 of the micropipette 100 and insertion is facilitated.

### (Second Embodiment)

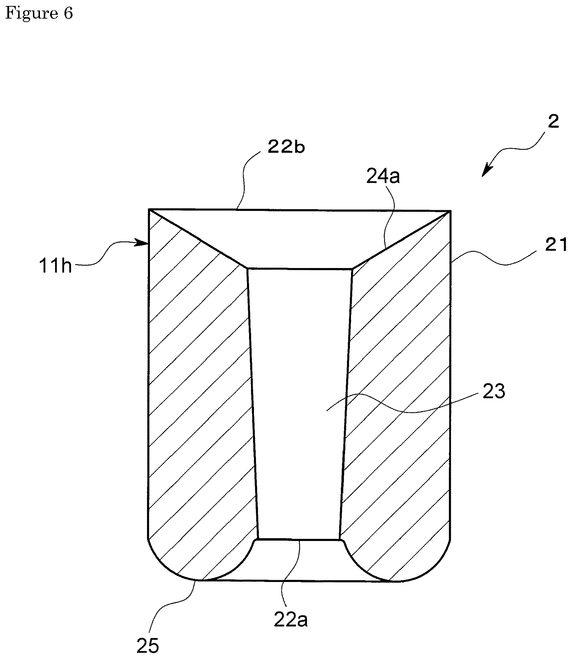

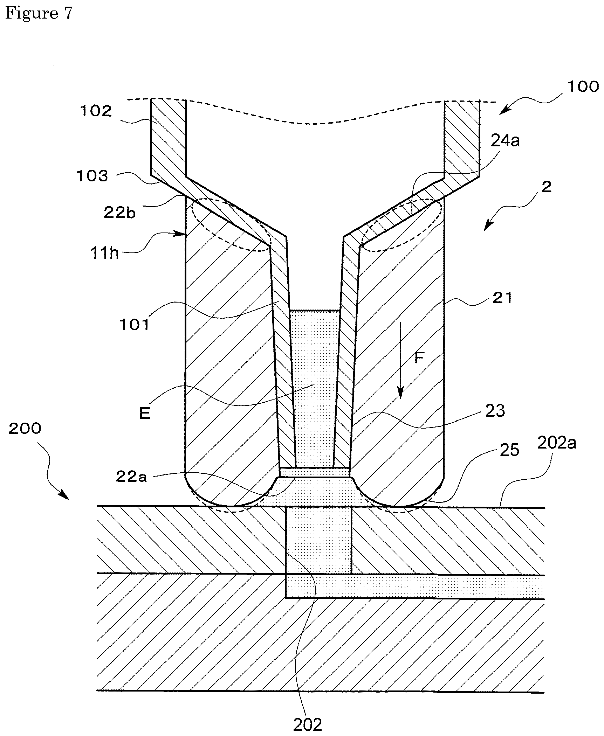

Figure 6 is a sectional view of a liquid injection attachment according to a second embodiment of the present invention, and Figure 7 is a sectional view illustrating the liquid injection attachment illustrated in Figure 6 in use.

This liquid injection attachment 2 does not have an annular rib such as one in the first embodiment in a through-hole 23 formed in an attachment body 21 consisting of a cylindrical rubber-like elastic body. Accordingly, an annular receiving face that receives a load of the micropipette 100 is not provided in the through-hole 23.

Specific materials for the rubber-like elastic body may be selected as appropriate in consideration of a type or the like of liquid injected from the micropipette 100, and typically include silicone rubber, fluororubber, acrylic rubber, nitrile rubber, butyl rubber, and the like. A method for forming the attachment body 21 includes, but not particularly limited to, compression molding, injection molding, and the like.

In the liquid injection attachment 2, instead, the annular receiving face 24a is formed on a rear end portion (a top end face in Figure 6) of the attachment body 21. The annular receiving face 24a is a tapered surface formed by opening an insertion opening 22b of the attachment body 21 in a conical shape.

Further, in the liquid injection attachment 2, an annular lip portion 25 is formed integrally with the front end face of the attachment body 21. The annular lip portion 25 is configured to have approximately the same width as the annular receiving face 24a.

Further, although the description has been made to the case in which the annular lip portion 25 is integrated with the front end face of the attachment body 21, they may be separate bodies from each other.

When provided as separate bodies, the annular lip portion 25 may be made of a material different from that for the attachment body 21, and in this case, the annular lip portion 25 is preferably made of a material softer than that for the attachment body 21. In this way, the annular lip portion 25 can efficiently be compressed and deformed, so that the amount of collapse sufficient for forming the seal element can be secured.

For the annular lip portion 25, a specific sectional shape is also not particularly limited. Further, the number of the annular lip portion 25 is not limited to one, but more than one annular lip portion 25 may be concentrically provided on condition that they are within the area of the front end face of the attachment body 21.

As illustrated in Figure 7, the liquid injection attachment 2 is suitably used when the micropipette 100 has in its structure, for example, a cylindrical shoulder face 103 between a distal end section 101 having the smaller diameter and a cylindrical body 102 having the larger diameter like a syringe. As illustrated in a dashed line area in Figure 7, the annular receiving face 24a is brought into contact with the cylindrical shoulder face 103 of the micropipette 100 inserted in the insertion opening 22b, and then serves as an element that receives a load F directed in the axial direction of the micropipette 100.

It should be noted that the annular receiving face 24a is in a shape corresponding to the shape of the cylindrical shoulder face 103 of the micropipette 100. The cylindrical shoulder face 103 illustrated in Figure 7 is formed in a conical shape, and thus the annular receiving face 24a is also formed in a conical shape. However, when the cylindrical shoulder face 103 of the micropipette 100 has a horizontal face, the annular receiving face 24a is also formed in a horizontal face.

The axial dimension of the attachment body 21 is configured such that the distal end section 101 does not project from a liquid flow outlet 22a when the cylindrical shoulder face 103 of the micropipette 100 is in contact with the annular receiving face 24a so that the amount of collapse of the annular lip portion 25 can be secured.

First, according to the liquid injection attachment 2, the cylindrical shoulder face 103 of the micropipette 100 is brought into contact with the annular receiving face 24a during liquid injection, so that the load F in the axial direction of the micropipette 100 is applied to the annular receiving face 24a. As a result, a first seal portion is formed between the cylindrical shoulder face 103 of the micropipette 100 and the annular receiving face 24a.

The load F applied to the annular receiving face 24a acts on the annular lip portion 25 via the attachment body 21 in the axial direction of the micropipette 100. The load F acts on the annular lip portion 25 in the axial direction of the micropipette 100. Then, the annular lip portion 25 is compressed to be elastically deformed against the upper face (injection face) 202a and seals the periphery of the inlet (injection port) 202. As a result, a second seal portion is formed between the annular lip portion 25 and the upper face (injection face) 202a.

Accordingly, the liquid injection attachment 2 also has the similar advantage to the liquid injection attachment 1 according to the first embodiment. In other words, the annular lip portion 25 can efficiently be compressed, so that the amount of collapse sufficient for being able to absorb the tolerance of the micropipette 100 can easily be secured for better sealing. In addition, since the load F is applied to the annular receiving face 24a in the axial direction of the micropipette 100 without radial deformation of the through-hole 23, the attachment body 21 may not be buckled, deformed or damaged, and the micropipette 100 can stably be held during liquid injection.

Furthermore, since only the annular lip portion 25 is collapsed as illustrated by the dashed line under the load F and the attachment body 21 itself may not be deformed to greatly bulge in the radial direction, the liquid injection attachment 2 may not interfere with other inlets (injection ports) or the like during liquid injection.

Further, with the liquid injection attachment 2, it is also possible to create seals in two locations: between the cylindrical shoulder face 103 of the micropipette 100 and the annular receiving face 24a; and between the annular lip portion 25 and the upper face (injection face) 202a. No seal element needs to be formed between an inner peripheral surface of the through-hole 23 and an outer peripheral surface of the distal end section 101 of the micropipette 100. As a result, there is no need of press fitting of the distal end section 101 of the micropipette 100 and insertion is facilitated.

Further, according to the liquid injection attachment 2, a larger surface area of a seal element formed by the annular receiving face 24a and the annular lip portion 25 can be secured compared to the case in which the load F is applied from the distal end face 101a of the micropipette 100 as in the case of the liquid injection attachment 1. This is because the annular receiving face 24a receives the cylindrical shoulder face 103, which is larger than the distal end face 101a of the micropipette 100. In this way, the stability of the seal is improved and the design freedom of the annular lip portion 25 can be increased.

### (Third Embodiment)

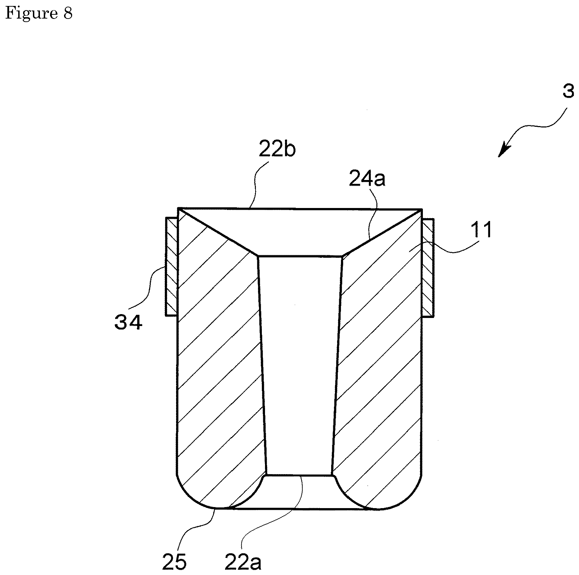

Figure 8 is a sectional view of a liquid injection attachment according to a third embodiment of the present invention.

The liquid injection attachment 3 is provided with an annular anti-diameter expansion member 34 on the outer periphery of a liquid injection attachment body 11 on the rear end portion side where a seal is made between the cylindrical shoulder face 103 of the micropipette 100 and the annular receiving face 24a.

Depending on the shape of the micropipette 100, a component of force may be exerted in the radial direction. In this case, the anti-diameter expansion member 34 can be provided to cancel the component of force in the radial direction.

In other words, when the micropipette 100 is mounted, the component of force in the radial direction from the load F can reliably be canceled by the anti-diameter expansion member 34. As a result, since the load F is exerted only in the axial direction of the micropipette 100, it is possible to cause the load F to act reliably on the annular lip portion 25 in the axial direction of the micropipette 100.

The anti-diameter expansion member 34 is formed of a hard material in an annular shape so that the outer periphery of the liquid injection attachment body 11 can be held stably. Preferably, a specific material is, but not particularly limited to, an inexpensive and easily moldable synthetic resin. A specific synthetic resin includes, for example, a thermoplastic resin such as polyethylene and polypropylene.

In the embodiment, although the description has been made to the case in which the anti-diameter expansion member 34 is formed from an annular plate, the invention is not so limited, and the anti-diameter expansion member 34 may be formed from a lattice meshed body along the outer periphery of the attachment body 11.

### (Forth Embodiment)

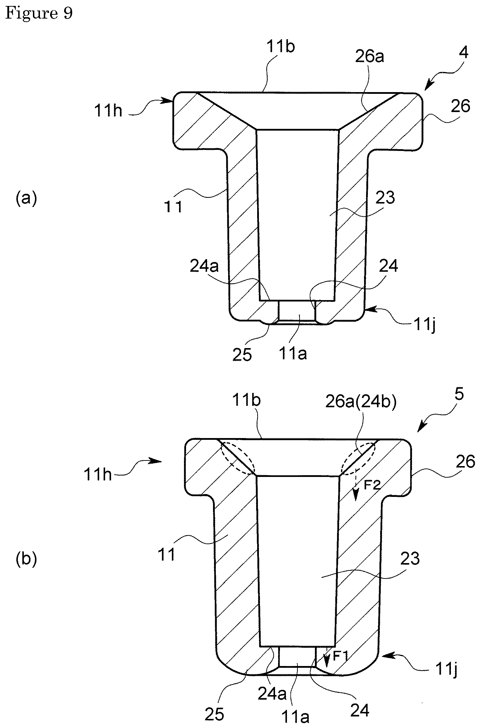

Figures 9(a) and 9(b) are sectional views of a liquid injection attachment according to a fourth embodiment of the present invention. In Figures 9(a) and 9(b), elements with the same reference numerals as those in Figures 3 to 5 and Figures 6 and 7 are elements having the same configuration, and thus the description of those elements will be omitted with reference to the above description.

In Figure 9(a), a liquid injection attachment 4 is an equivalent to the liquid injection attachment 1 according to the first embodiment that has a flange portion 26 overhanging radially outward and integrally provided to the outer periphery of the rear end side 11h of the attachment body 11 thereof.

On the rear face of the rear end side 11h of the attachment body 11, a conical tapered surface 26a diametrically expands toward the insertion opening 11b is formed. Since the flange portion 26 is provided, a tapered surface 26a can be formed, and the tapered surface 26a allows the diameter of the insertion opening 11b to be larger. In addition, since the flange portion 26 is provided, the wall thickness of the injection attachment 4 can be reduced.

In the liquid injection attachment 4, in addition to the advantage of the liquid injection attachment 1 according to the first embodiment, it is easier to insert the distal end section 101 of the micropipette 100 into the insertion opening 11b because the diameter of the insertion opening 11b can be increased. In this way, the advantage of improved operability can be obtained when the distal end section 101 of the micropipette 100 is inserted.

The provision of the flange portion 26 also has the advantage in that handling properties of the liquid injection attachment 4 are enhanced. For example, insertion or removal of the distal end section 101 of the micropipette 100 can be facilitated by pinching the flange portion 26.

Although not illustrated, the liquid injection attachment 2 in the second embodiment may be provided with a flange portion 26 similar to that of the liquid injection attachment 4 according to the fourth embodiment, so that the insertion and removal can be facilitated.

Figure 9(b) illustrates a sectional view of a liquid injection attachment 5 in the case in which the tapered surface 26a of the liquid injection attachment 4 in Figure 9(a) is caused to function as a second annular receiving face 24a of the liquid injection attachment 2 according to the second embodiment.

In Figure 9(b), the annular receiving face 24a of the annular rib 24 is referred to as a first annular receiving face 24a. The liquid injection attachment 5 has an annular lip portion 25 formed on the front end face of the liquid injection attachment body 11. Further, the tapered surface 26a is caused to function as the second annular receiving face 24b.

The axial dimension of the attachment body 11 is configured such that the cylindrical shoulder face 103 illustrated in Figure 7 is brought into contact with the second annular receiving face 24b when the distal end section 101 of the micropipette 100 is in contact with the first annular receiving face 24a so that the amount of collapse of the annular lip portion 25 can be secured.

The annular lip portion 25 is configured to have approximately the same width as the width in the radial direction of the tapered surface 26a plus the width in the radial direction of the annular rib 24. This is to transmit the respective loads F1 and F2 in the axial direction from the micropipette 100 to the annular lip portion 25 while preventing the insertion opening 11b from expanding in the width direction.

In the example illustrated in Figure 9(b), the flange portion 26 may or may not be present because it is not essential for securing the tapered surface 26a. When present, it has the similar advantage of improved operability to the embodiment illustrated in Figure 9(a).

The liquid injection attachment 5 has the advantage of the liquid injection attachment 4 illustrated in Figure 9(a) with the provision of the tapered surface 26a. Further, in the case in which the tapered surface 26a is caused to function as the second annular receiving face 24b, When the liquid injecting implement is inserted, the first annular receiving face 24a and the second annular receiving face 24b receive the load F1 from the distal end portion of the liquid injecting implement and receive the load F2 from the cylindrical shoulder face in a dashed line illustrated in Figure 9(b). The respective loads F1 and F2 act, when received, vertically on the annular lip portion 25 via the attachment body 11. In this way, the annular lip portion 25 can efficiently be compressed, so that the amount of collapse sufficient for being able to absorb the tolerance of the liquid injecting implement can easily be secured for better sealing. In this case, in the annular lip portion 25, a larger surface area of a seal element can be secured and the stability of the seal can be improved.

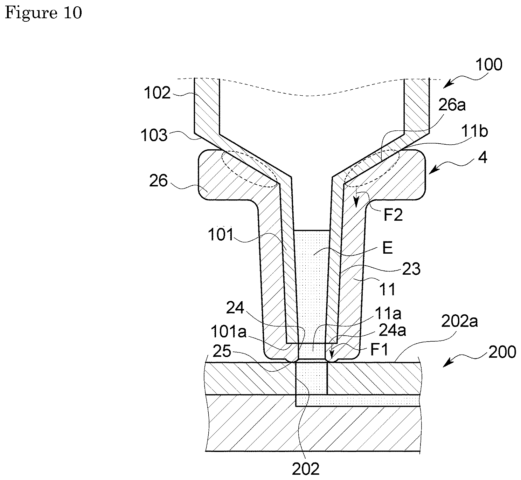

Figure 10 is a sectional view illustrating the liquid injection attachment illustrated in Figure 9(a) in use, and illustrating a configuration of a liquid injection device of the present invention.

Now, how the liquid injection attachment 4 is used to inject liquid E into the inlet (injection port) 202 of the micro-fluid chip 200, as illustrated in Figure 10, will be described.

As illustrated in Figure 10, the liquid injection attachment 4 is suitably used when the micropipette 100 has in its structure, for example, a cylindrical shoulder face 103 between a distal end section 101 having the smaller diameter and a cylindrical body 102 having the larger diameter like a syringe. The liquid injection attachment 4 and the micropipette 100 constitute the liquid injection device of the present invention.

First, the distal end section 101 of the micropipette 100 is inserted into the insertion opening 11b of the attachment body 11. Then, the annular lip portion 25 of the liquid injection attachment 1 is brought into contact with the upper face (injection face) 202a around the inlet (injection port) 202, the load F1 of the micropipette 100 is applied to the annular receiving face 24a in the axial direction. In other words, the distal end face 101a of the micropipette 100 is brought into contact with the annular receiving face 24a in the through-hole 23 to form a first seal portion between the distal end face 101a and the annular receiving face 24a.

Next, once the annular receiving face 24a receives the load F1 in the axial direction from the micropipette 100, the load F1 acts on the annular rib 24 in the axial direction of the micropipette 100. Then, the annular lip portion 25 is compressed to be elastically deformed against the upper face (injection face) 202a and seals the periphery of the inlet (injection port) 202. As a result, a second seal portion is formed between the annular lip portion 25 and the upper face (injection face) 202a.

Furthermore, as illustrated in a dashed line area in Figure 10, the tapered surface 26a is brought into contact with the cylindrical shoulder face 103 of the micropipette 100, and a third seal portion is formed between the tapered surface 26a and the cylindrical shoulder face 103. The tapered surface 26a also serves as an element that receives a load F2 directed in the axial direction of the micropipette 100.

The tapered surface 26a has a shape corresponding to the cylindrical shoulder face 103 of the micropipette 100. The cylindrical shoulder face 103 illustrated in Figure 10 is formed in a conical shape, and thus the tapered surface 26a is also formed in a conical shape. However, when the cylindrical shoulder face 103 of the micropipette 100 has a horizontal face, the tapered surface 26a is also formed in a horizontal face.

Then, the liquid E in the micropipette 100 is sent from the liquid flow outlet 11a of the liquid injection attachment 1 to the inlet (injection port) 202 of the micro-fluid chip 200, without leakage to the outside because of the first and second seal portions.

In this way, according to the liquid injection attachment 4, when the micropipette 100 is pressed to apply the load F1 to the upper face (injection face) 202a in the axial direction, the distal end face 101a of the micropipette 100 is brought into contact with the annular receiving face 24a, so that the load F1 in the axial direction of the micropipette 100 is applied to the annular receiving face 24a. In addition, the cylindrical shoulder face 103 of the micropipette 100 is brought into contact with the tapered surface 26a, so that the load F2 in the axial direction of the micropipette 100 is applied to the tapered surface 26a.

Then, when the load F1 is exerted in the axial direction of the micropipette 100, the load F1 acts on the annular lip portion 25 via the annular rib 24 in the axial direction of the micropipette 100. Further, the load F2 in the axial direction of the micropipette 100 acts on the annular lip portion 25 via the tapered surface 26a in the axial direction of the micropipette 100. In this way, the annular lip portion 25 can efficiently be compressed, so that the amount of collapse sufficient for being able to absorb the tolerance of the micropipette 100 can easily be secured for better sealing.

In addition, since the load F1 applied to the annular receiving face 24a does not radially deform the through-hole 23, the attachment body 11 may not be buckled, deformed or damaged, and the micropipette 100 can stably be held during liquid injection.

Furthermore, since the annular lip portion 25 is mostly collapsed under the load F1 and the attachment body 11 itself may not be deformed to greatly bulge in the radial direction, the liquid injection attachment 1 may not interfere with other inlets (injection ports) or the like during liquid injection.

Further, according to the liquid injection attachment 1, it is possible to create seals in three locations: between the distal end face 101a of the micropipette 100 and the annular receiving face 24a; between the annular lip portion 25 and the upper face (injection face) 202a; and between the cylindrical shoulder face 103 of the micropipette 100 and the tapered surface 26a.

Since no seal element needs to be formed between an inner peripheral surface of the through-hole 23 and an outer peripheral surface of the distal end section 101 of the micropipette 100, there is no need of press fitting of the distal end section 101 of the micropipette 100 and insertion is facilitated.

Further, according to the liquid injection attachment 4, a larger surface area of a seal element can be secured compared to the case of receiving only the load F from the distal end face 101a of the micropipette 100. This is because the tapered surface 26a receives the cylindrical shoulder face 103, which is larger than the distal end face 101a of the micropipette 100. In this way, the stability of the seal is improved and the design freedom of the annular lip portion 25 can be increased.

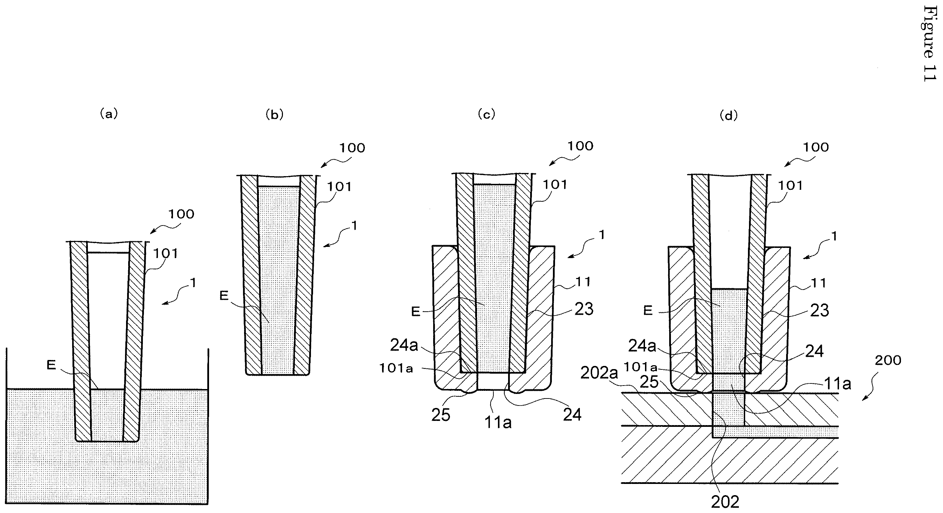

Figure 11 is an illustration 1 of an example of a method for injecting liquid using the present invention.

An exemplary liquid injection into the inlet (injection port) 202 of the micro-fluid chip 200 using the liquid injection attachment 1 illustrated in Figures 1 to 5 will now be described. It should be noted that in the method for injecting liquid of the present invention, the liquid injection attachments illustrated in Figures 6 to 9 can also be used to inject liquid.

First, the micropipette 100 is used to suck or collect liquid E such as reagent contained in a sample container (such as microtube, sample tube, vial, test tube, centrifuge tube, or conical tube) (Figure 11(a)). At this time, the liquid injection attachment 1 is not yet mounted on the distal end section 101a of the micropipette 100. After the liquid E is sucked or collected, the micropipette 100 is picked up from the sample container (Figure 11(b)).

Next, the distal end section 101a of the micropipette 100 is inserted into the insertion opening 11b of the liquid injection attachment 1 for mounting the liquid injection attachment 1 to the distal end section 101a (Figure 11(c)). The mounting of the liquid injection attachment 1 is completed when the distal end face 101a of the micropipette 100 is in contact with the annular receiving face 24a of the annular rib 24 on the attachment body 11 such that further insertion is prevented.

Next, the micropipette 100 having the liquid injection attachment 1 mounted thereon is directed and pressed onto the inlet (injection port) 202 of the micro-fluid chip 200. In other word, the annular lip portion 25 of the attachment body 11 on the liquid injection attachment 1 is brought into contact with the upper face (injection face) 202a around the inlet (injection port) 202 (Figure 11(d)). Then, by directing and pressing the distal end face 101a of the micropipette 100 onto the annular receiving face 24a, a load is applied to the annular receiving face 24a from the distal end face 101a of the micropipette 100, and the load causes the annular lip portion 25 to be compressed and deformed.

Next, the liquid E in the micropipette 100 is injected into the inlet (injection port) 202 of the micro-fluid chip 200 by the injection pressure of the micropipette 100. At this time, since the annular lip portion 25 is compressively deformed to generate a reaction force, the liquid E does not leak to the outside. The liquid E is introduced into the micro-fluid chip 200 from the micropipette 100 through the liquid flow outlet 11a of the liquid injection attachment 1 and the inlet (injection port) 202.

According to the method for injecting liquid, to inject liquid from the micropipette 100 to the inlet (injection port) 202, better sealing effect produced by the annular lip portion 25 can prevent liquid leakage and liquid injection operation can be accomplished in a simple way only by mounting the liquid injection attachment 1 to the distal end section 101a of the micropipette 100.

In the step of sucking or collecting the liquid E contained in the sample container, since the liquid injection attachment 1 is not yet mounted to the distal end section 101 of the micropipette 100, it is not dipped into the liquid E in the sample container. In this way, dripping of liquid can be avoided.

Furthermore, in the method for injecting liquid, an automatic pipette device or a pipetting robot can be used for mounting the liquid injection attachment 1 to the distal end section 101a of the micropipette 100 or for pressing the micropipette 100 onto the micro-fluid chip 200, and thus the liquid can be injected by a simple system configuration. In addition, the injection can be automated. Furthermore, when a multi-channel pipette is used as the micropipette 100, liquid can be injected into more than one micro-fluid chip 200 at the same time.

### EXPLANATIONS OF LETTERS OR NUMERALS

1, 2, 3, 4, 5: liquid injection attachment
11, 21: attachment body
   11a, 22a: liquid flow outlet
   11b, 22b: insertion opening
   11j: front end side
   11h: rear end side
23: through-hole
24: annular rib
   24a: annular receiving face
25: annular lip portion
26: flange portion
   26a: tapered surface
34: anti-diameter expansion member
100: liquid injecting implement (micropipette)
101: distal end section
   101a: distal end face
102: cylindrical body
103: cylindrical shoulder face
110: pipette tip
111: distal end section
200: micro-fluid chip
201: microchannel
202: inlet (injection port)
   202a: upper face (injection face)
300: syringe
301: distal end section
   C: sample container
   E: liquid such as reagent

## Claims

1. A liquid injection attachment, wherein
a through-hole is included within an attachment body having a cylindrical shape,
an insertion opening receiving a distal end portion of a liquid injecting implement inserted thereinto is included on a rear end portion side of the through-hole, and a liquid flow outlet discharging liquid injected from the liquid injecting implement to outside of the attachment body is included on a front end portion side,
an annular rib having a plate shape projecting inward in the through-hole leaving the liquid flow outlet is provided in a front end portion of the attachment body,
an annular receiving face is included on the annular rib and facing the rear end portion side of the through-hole, the annular receiving face receiving a load from the liquid injecting implement in an axial direction during liquid injection, and
an annular lip portion around the liquid flow outlet is provided at a location where the load received by the annular receiving face of the annular rib acts on in an axial direction.

2. A liquid injection attachment, wherein
a through-hole is included within an attachment body having a cylindrical shape,
an insertion opening receiving a distal end portion of a liquid injecting implement inserted thereinto is included on a rear end portion side of the through-hole, and a liquid flow outlet discharging liquid injected from the liquid injecting implement to outside of the attachment body is included on a front end portion side,
an annular receiving face to be in contact with the liquid injecting implement and receiving a load in an axial direction during liquid injection is provided in a rear end portion of the attachment body, and
in a front end portion of the attachment body, an annular lip portion around the liquid flow outlet is provided at a location where the load received by the annular receiving face acts on in an axial direction.

3. The liquid injection attachment according to claim 1 or 2, wherein a flange portion overhanging radially outward is provided on an outer periphery of a rear end portion of the attachment body.

4. The liquid injection attachment according to claim 1 or 2, wherein an anti-diameter expansion member for preventing a force in a radial direction is formed on an outer periphery of a rear end portion of the attachment body.

5. The liquid injection attachment according to any one of claims 1 to 4, wherein a tapered surface diametrically expanding toward the insertion opening is formed in a rear end portion of the attachment body.

6. A liquid injection device, comprising:
a liquid injection attachment including: an attachment body having a cylindrical shape, the attachment body having a through-hole inside; an insertion opening provided on a rear end portion side of the through-hole, the insertion opening receiving a distal end portion of a liquid injecting implement inserted thereinto; a liquid flow outlet provided on a front end portion side of the through-hole, the liquid flow outlet discharging liquid injected from the liquid injecting implement to outside of the attachment body; an annular rib having a plate shape projecting inward in the through-hole leaving the liquid flow outlet in a front end portion of the attachment body; an annular receiving face on the annular rib and facing the rear end portion side of the through-hole, the annular receiving face receiving a load from the liquid injecting implement in an axial direction during liquid injection; a flange portion overhanging radially outward on an outer periphery of a rear end portion of the attachment body; and a tapered surface formed on the rear end side of the attachment body and diametrically expanding toward the insertion opening of the attachment body; and
a liquid injecting implement having a distal end portion being inserted into the insertion opening and a distal end face being brought into contact with the annular receiving face, the liquid injecting implement having a cylindrical shoulder face having a tapered shape corresponding to a shape of the tapered surface,
wherein in the front end portion of the attachment body, an annular lip portion around the liquid flow outlet is provided at a location where the load received by the annular receiving face from the liquid injecting implement acts on in an axial direction.
